# EUROPEAN PATENT APPLICATION

(11) **EP 0 932 054 A2**
(43) Date of publication of application: **28.07.1999**
(21) Application number: 99300549.5
(22) Date of filing: 26.01.1999
(51) Int. Cl.: G01V 1/22, E21B 47/12

(54) **Downhole telemetry system and method for remote communication**

(30) Priority: 27.01.1998 US 14351
(71) Applicant: Halliburton Energy Services, Inc., Dallas, Texas 75381-9052 (US)
(72) Inventor: Smith, Harrison, Anna, Texas 75409 (US); Ringgenberg, Paul D., Carrollton, Texas 75006 (US)
(74) Representative: Wain, Christopher Paul

(57) **Abstract**

A downhole telemetry system (10) for remote communication. The system (10) includes a downhole transmitter (44) that radiates an electromagnetic signal (46) carrying information into the earth. The electromagnetic signal (46) is received by a subsea repeater (48) that processes and retransmits the information through the sea. A remote station (54) receives the information from the subsea repeater (48) and stores the information. A master station (70) periodically polls the remote station (54) to request the information using meteor burst trails (76) to reflect radio waves (80) between the master station (70) and the remote station (54). Following the request, the remote station (54) generates radio waves (80) carrying the information that are reflected off meteor burst trails (78) and received by the master station (54).

## Description

This invention relates in general to downhole telemetry and, in particular to, a system and method for telemetry of information between downhole equipment in a remote location and a control center.

Without limiting the scope of the present invention, its background is described in connection with transmitting data using meteor burst trails, as an example.

Literally billions of particles enter the Earth's atmosphere daily and upon colliding with air molecules form long columns or trails of ionized particles. It has been found that these ionized columns may be utilized as a forward scattering media for VHF signals in the 30-50 MHz range over a great distance.

Meteors entering the atmosphere at altitudes of 50 to 75 miles (80 to 120 km) fall into four general categories: particles that pass through the atmosphere, partially ionize and fall to the ground, particles that totally disintegrate in the upper atmosphere, particles that float down unchanged by atmospheric collisions and particles removed from the solar system by radiation pressure. The particles providing the most benefit in signal scattering are those particles that totally disintegrate in the upper atmosphere. This type of particle typically has a diameter of 16 microns to eight centimeters and has a mass from 10⁻⁸ to 10³ grams. The most beneficial particles of this type, however, are those with diameters ranging from 40 microns to four centimeters. Particles with diameters greater than four centimeters do not occur in great enough abundance to contribute to reliable and consistent scattering while those with diameters less than 40 microns burn up too rapidly to provide a trail of sufficient time duration.

As meteors enter the Earth's upper atmosphere, they begin to collide with air molecules thereby ionizing to form a long, thin paraboloid with the meteor particle at the head. The height and angle at which the ionization begins and the mass of the meteor determines the overall length of the trail. A typical trail for particles that totally disintegrate in the upper atmosphere will be approximately 10-12 feet (3 to 3.7m) in diameter and 9 miles (14.5km) long. Once formed, these trails begin to degrade due to a variety of circumstances, such as dissipation and wind currents in the upper atmosphere. This degradation results in typical durations of approximately 200 to 1,000 milliseconds. From this short life comes the name most commonly associated with the phenomenon, "Meteor Burst."

The ability of the ionized trail formation to provide suitable forward scattering of signals is affected by the density of the trails. Overdense trails have electron densities high enough (greater than 10¹⁴ electrons per meter) to prevent complete penetration of the incident wave and cause reflection much the same as ordinary ionospheric reflections. Underdense trails have an electron density that is low enough (less than 10¹⁴ electrons per meter) that the incident wave passes through the trail, causing the trail to be considered as an array of independent scatterers. The underdense trails are more prevalent and actually provide a reradiation of the signal. Even though the underdense trails have shorter durations, the fact that they are more abundant and do have this reradiation quality make them invaluable in providing an operational system.

Therefore, a need has arisen for a system that utilizes meteor burst trails to telemeter downhole information from a remote location to a plafform or shorebase. A need has also arisen for such as system that is capable of telemetering real time information between equipment on the platform or shorebase and downhole equipment in remote wells. Further, a need has arisen for such as system that may poll numerous remote wells to gather information.

The present invention disclosed herein provides a system and method that utilize meteor burst trails to telemeter downhole information from a remote well location to a master station on a platform or shorebase. The system and method are capable of telemetering real time information between the master station and the downhole equipment in remote wells or may periodically poll numerous remote wells to gather information.

The system comprises a downhole transmitter that radiates electromagnetic waves carrying information into the earth. The electromagnetic waves are picked up by a subsea repeater that processes and retransmits the information through the sea. The information is received by a remote station that processes and stores the information. Upon receiving a request from a master station, the remote station generates a radio signal carrying the information that is reflected off meteor burst trails. The master station receives the radio signal carrying the information and may further process the information placing it in a usable format.

The subsea repeater of the system may include an electromagnetic receiver having an E-field probe and an H-field probe to pickup either the E-field component of the electromagnetic signal, the H-field component of the electromagnetic signal or both. The subsea repeater also includes an electronics package for processing and storing the information. The subsea repeater may include an acoustic transmitter for transmitting the information through the sea which may use frequency shift keying, multiple frequency shift keying or other suitable coding to carry the information. Alternatively, an electrical wire may connect the subsea repeater to the remote station for transmitting the information therebetween.

The remote station may include an acoustic receiver for receiving an interpreting an acoustic signal sent by the subsea repeater. The remote station may also include an electronics package for processing the information and a storage device for storing the information until a request is received from the master station. The master station includes an antenna, a transceiver and a processor such that the master station may request, received and interpret the downhole information from the remote wells.

The method of the present invention comprising the steps of receiving an electromagnetic signal carrying downhole information from downhole equipment, transmitting the information through the sea, generating a radio signal carrying the information, reflecting the radio signal carrying the information off meteor burst trails and receiving the radio signal carrying the information at the master station. The method includes transforming the electromagnetic signal into an electrical signal and processing the information in the electrical signal in an electronics package.

The electrical signal is then transformed into an acoustic signal that is propagated through the sea using, for example, frequency shift keying or multiple frequency shift keying. The method then involves transforming the acoustic signal into an electrical signal which is processed and stored in an electronics package of the remote station.

The electrical signal is then transformed into a radio signal that is reflected off of meteor burst trails upon request by the master station. The radio signal is then transformed into an electrical signal at the master station and processed to convert the information into a useable format.

According to one aspect of the invention there is provided a downhole telemetry system for remote communication comprising: a downhole transmitter radiating an electromagnetic signal carrying information into the earth; a subsea repeater communicably linked to the downhole transmitter, the subsea repeater receiving the electromagnetic signal carrying the information and retransmitting the information through the sea; a remote station communicably linked to the subsea repeater, the remote station receiving the information and generating a radio signal carrying the information that is reflected off meteor burst trails; and a master station communicably linked to the remote station, the master station receiving the radio signal carrying the information.

According to another aspect of the invention there is provided a downhole telemetry system for remote communication comprising: a master station generating a radio signal carrying a request for information that is reflected off meteor burst trails; a remote station communicably linked to the master station, the remote station receiving the radio signal carrying the request for information and retransmitting the request for information through the sea; a subsea repeater communicably linked to the remote station, the subsea repeater receiving the request for information and generating an electromagnetic signal carrying the request for information that is radiated into the earth; and a downhole receiver communicably linked to the subsea repeater, the downhole receiver receiving the electromagnetic signal carrying the request for information.

In an embodiment, the subsea repeater further comprises an electromagnetic receiver. The electromagnetic receiver may further comprise at least one E-field probe having an end that is insertable into the earth, and/or a H-field probe having an end that is insertable into the earth.

In an embodiment, the subsea repeater further comprises an electronics package which may process the information. The electronics package may further include a storage device for storing the information.

In an embodiment, the subsea repeater further comprises an acoustic transmitter. The acoustic transmitter may retransmit the information using frequency shift keying or using multiple frequency shift keying.

In an embodiment, the system further comprises an electrical wire electrically connecting the subsea repeater to the remote station for transmitting the information therebetween.

In an embodiment, the remote station further comprises an acoustic receiver and/or an electronics package.

The electronics package may further include a storage device for storing the information and/or an amplifier.

In an embodiment, the remote station further comprises a radio transmitter.

In an embodiment, the master station requests the information from the remote station. The master station may further comprise one or more of an antenna, a radio receiver and a computer.

According to another aspect of the invention there is provided a method for remote communication between downhole equipment and a master station comprising the steps of: receiving an electromagnetic signal carrying the information from the downhole equipment; transmitting the information through the sea; generating a radio signal carrying the information; reflecting the radio signal carrying the information off meteor burst trails; and receiving the radio signal carrying the information at the master station.

In an embodiment, the step of receiving an electromagnetic signal further comprises receiving the H-field component of the electromagnetic signal with an H-field probe having an end that is insertable into the earth.

In an embodiment, the step of receiving an electromagnetic signal further comprises receiving the E-field component of the electromagnetic signal with at least one E-field probe having an end that is insertable into the earth.

In an embodiment, the step of receiving an electromagnetic signal further comprises receiving the H-field component of the electromagnetic signal with an H-field probe having an end that is insertable into the earth and receiving the E-field component of the electromagnetic signal with at least one E-field probe having an end that is insertable into the earth.

In an embodiment, the method further comprises the step of transforming the electromagnetic signal into an electrical signal.

In an embodiment, the method further comprises the step of processing the information in the electrical signal in an electronics package.

In an embodiment, the method further comprises the step of storing the information in the electrical signal in an electronics package.

In an embodiment, the method further comprises the step of transforming the electrical signal into an acoustic signal.

In an embodiment, the step of transmitting the information through the sea further comprises: generating an acoustic signal carrying the information; propagated the acoustic signal carrying the information through the sea; and receiving the acoustic signal carrying the information.

In an embodiment, the step of propagating the acoustic signal further comprises using frequency shift keying.

In an embodiment, the step of propagating the acoustic signal further comprises using multiple frequency shift keying.

In an embodiment, the method further comprises the step of transforming the acoustic signal into an electrical signal.

In an embodiment, the method further comprises the step of processing the information in the electrical signal in an electronics package.

In an embodiment, the method further comprises the step of storing the information in the electrical signal in an electronics package.

In an embodiment, the method further comprises the step of transforming the electrical signal into a radio signal.

In an embodiment, the step of transmitting the information through the sea further comprises transmitting the information via an electric wire.

In an embodiment, the method further comprises the step of transforming the radio signal into an electrical signal.

In an embodiment, the method further comprises the step of requesting the information by the master station.

According to another aspect of the invention there is provided a method for remote communication with downhole equipment comprising the steps of: generating a radio signal carrying a request for information; reflecting the radio signal carrying the request for information off meteor burst trails; receiving the radio signal carrying the request for information; transmitting the request for information through the sea; generating an electromagnetic signal carrying the request for information; radiating the electromagnetic signal into the earth; and receiving the electromagnetic signal carrying the request for information at a downhole location.

In an embodiment, the method further comprises the step of transforming the radio signal into an electrical signal.

In an embodiment, the method further comprises the step of processing the information in the electrical signal in an electronics package.

In an embodiment, the method further comprises the step of transforming the electrical signal into an acoustic signal.

In an embodiment, the step of transmitting the information through the sea further comprises: generating an acoustic signal carrying the request for information; propagated the acoustic signal carrying the request for information through the sea; and receiving the acoustic signal carrying the request for information.

In an embodiment, the step of propagating the acoustic signal further comprises using frequency shift keying.

In an embodiment, the step of propagating the acoustic signal further comprises using multiple frequency shift keying.

In an embodiment, the method further comprises the step of transforming the acoustic signal into an electrical signal.

In an embodiment, the method further comprises the step of processing the request for information in the electrical signal in an electronics package.

In an embodiment, the method further comprises the step of transforming the electrical signal into an electromagnetic signal.

In an embodiment, the step of transmitting the request for information through the sea further comprises transmitting the request for information via an electric wire.

In an embodiment, the method further comprises the step of transforming the electromagnetic signal into an electrical signal.

Reference is now made to the accompanying drawings, in which:
Figure 1 is a schematic illustration of an offshore oil or gas wellhead installation operating an embodiment of a system for remote communication according to the present invention;
Figure 2 is a schematic illustration of an embodiment of a subsea repeater according to the present invention;
Figure 3 is a block diagram of an embodiment of a signal processing method used by the subsea repeater according the present invention;
Figure 4 is a schematic illustration of the functional units of an embodiment of a master station according to the present invention; and
Figure 5 is a schematic illustration of an embodiment of a remote station according to the present invention.

While the making and using of various embodiments of the present invention are discussed in detail below, it should be appreciated that the present invention provides many applicable inventive concepts which can be embodied in a wide variety of specific contexts. The specific embodiments discussed herein are merely illustrative of specific ways to make and use the invention, and do not delimit the scope of the invention.

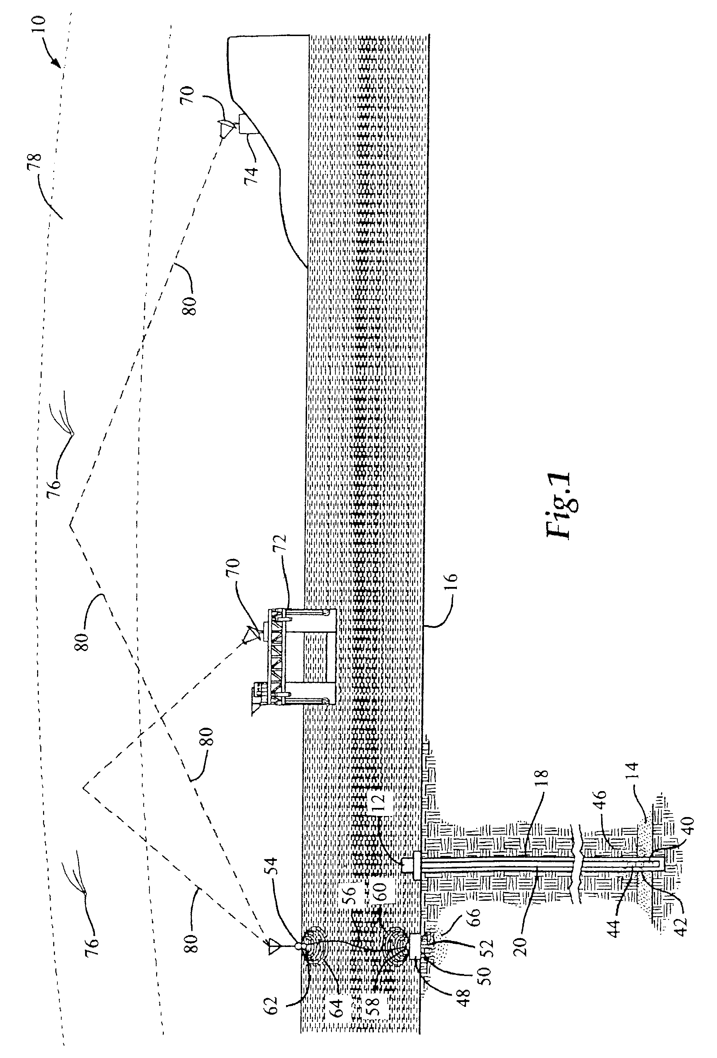

Referring to Figure 1, a downhole telemetry system for remote communication in use during an offshore production operation is schematically illustrated and generally designated 10. A remote subsea wellhead installation 12 is centered over a submerged oil and gas formation 14 located below sea floor 16. Wellbore 18 extends through the various earth strata and penetrates formation 14. Tubing string 20 is disposed within wellbore 18 to receive production therethrough from formation 14. Tubing string 20 includes various tools including sensors 40, electronics package 42 and electromagnetic transmitter 44.

Production parameters such as pressure and temperature as well as a variety of other environmental and formation information may be obtained by sensors 40. The signal generated by sensors 40 may typically be in the form of pulse width data, or the like, which must be converted to digital data before electromagnetic transmission in the present system. The signal generated by sensors 40 is passed into an electronics package 42 including an analog to digital converter which converts the analog signal to a digital code utilizing 1's and 0's for information transmission.

Electronics package 42 may also include electronic devices such as an on/off control, a modulator, a microprocessor, memory and amplifiers. Electronics package 42 is powered by a battery pack which may include a plurality of nickel cadmium or lithium batteries which are configured to provide proper operating voltage and current.

Once the electronics package 42 establishes the frequency, power and phase output of the information, electronics package 42 feeds the information to transmitter 44. Transmitter 44 may be a direct connect type transmitter that utilizes an output voltage applied between two electrical terminals that are electrically isolated from one another to generate electromagnetic wave fronts 46. Electromagnetic wave fronts 46 radiate into the earth carrying the information obtained by sensors 40.

Alternatively, transmitter 44 may include a magnetically permeable annular core, a plurality of primary electrical conductor windings and a plurality of secondary electrical conductor windings which are wrapped around the annular core. Collectively, the annular core, the primary windings and the secondary windings serve to approximate an electrical transformer which generates electromagnetic wave fronts 46. Additionally, this type of transmitter 44 may also serve as a receiver for receiving electromagnetic signals.

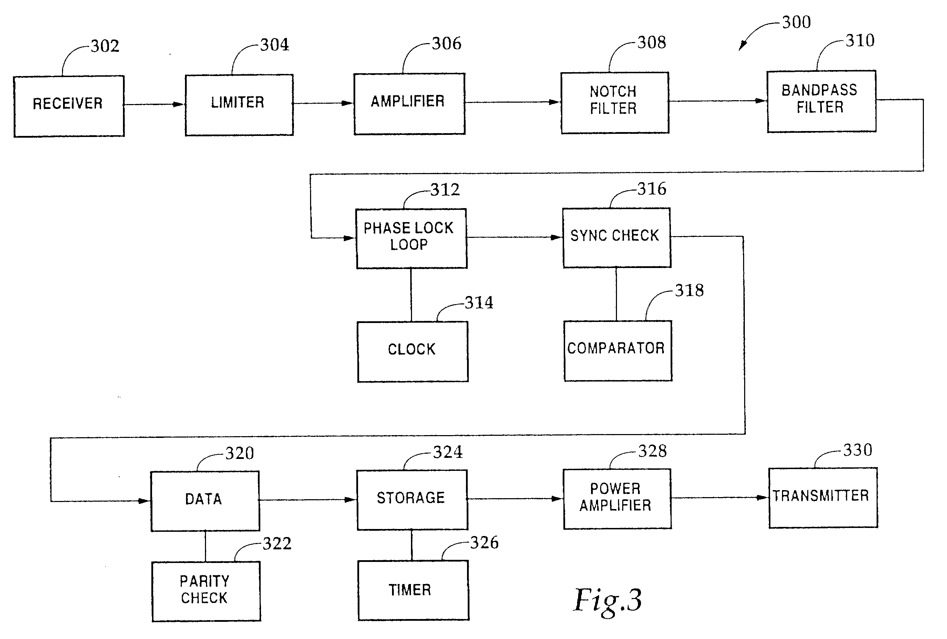

Electromagnetic wave fronts 46 travel through the earth and are received by subsea repeater 48 located on sea floor 16. Subsea repeater 48 may detect either the electrical field (E-field) component of electromagnetic wave fronts 46, the magnetic field (H-field) component of electromagnetic wave fronts 46 or both using E-field probes 50 and H-field probe 52 or both. As electromagnetic wave fronts 46 reach subsea repeater 48, a current is induced in subsea repeater 48 that carries the information originally obtained by sensors 40. The current is fed to an electronics package within subsea repeater 48 that may include a variety of electronic devices such as a preamplifier, a limiter, filters, shift registers, comparators and amplifiers as will be further discussed with reference to Figure 3. The electronics package cleans up and amplifies the signal to reconstruct the original waveform, compensating for losses and distortion occurring during the transmission of electromagnetic wave fronts 46 through the earth.

The electronics package may include a comparator for comparing the relative strength and clarity of the H-field component versus the E-field component of electromagnetic wave fronts 46. The electronics package may then select the stronger of the two signals for retransmission. Alternatively, the two signals may be electronically filtered and combined to produce a hybrid signal for retransmission. Also, it should be noted that the H-field component and the E-field component of electromagnetic wave fronts 46 received by subsea repeater 48 may be compared to determined whether both signals contain the identical information as a check of the validity of the transmitted data.

After the electrical signal has been processed, the information may be transmitted to remote station 54 via an electric wire 56. Alternatively, in deep water applications, the information may be forwarded to acoustic modem 58 that will transform the electrical signal into acoustic waves 60 which are picked up by acoustic modem 62 of remote station 54. The information originally obtained by sensors 40 may be stored in memory in remote station 54 for a predetermined period of time prior to forwarding. For example, in the remote production operation depicted in Figure 1, the information may be stored in the memory of remote station 54 for twelve hours or twenty-four hours prior to further transmission by remote station 54. In addition, it should be noted that subsea repeater 48 may store information for a predetermined period of time or simply process and forward the information that is received without storing the information in memory.

When the information is transmitted by acoustic modem 58, the information may be encoded into acoustic waves 60 by using, for example, frequency shift keying (FSK) or multiple frequency shift keying (MFSK). Using FSK, acoustic modem 58 converts the electrical signal from a digital format into an analog format by representing the digital values with different frequencies within a defined range. Using the FSK technique, the 0's and 1's of the digital information are represented by discreet frequency pulses using frequency f1 for the 0's and frequency f2 for the 1's. Each frequency pulse, f1 or f2, represents one data bit. Using FSK may provide reliable data transmission through the sea in the range of 40 baud. The data transfer rate is limited by transmission of only one bit at a time along with the need to have intervals between transmissions to eliminate ambiguities caused by the hostile sea environment.

Alternatively, acoustic modem 58 may transmit data using MFSK. MFSK modulation improves the data transmission rate by simultaneously broadcasting multiple data bytes. MFSK utilizes a group of four frequencies to represent the first two bits of the first byte. The next higher group of frequencies is used for the next two positions. By transmitting more than one data bit simultaneously, the data transfer rate is dramatically increased. For example, in an application using the FSK technique to provide reliable transmission of data at 40 baud, using the MFSK technique would achieve reliable transmission of data at 1,200 baud, allowing data collection to be accomplished in 1/30th of the time it would take with FSK. Additionally, when the conditions of the sea are such that high error rates are occurring, the MFSK technique can be used to transmit two copies of each data bit so that remote station 54 may perform error detection and correction while having data transferred at, for example, 600 baud.

Subsea repeater 48 of the present invention may also be used as a downlink to communicate information from remote station 54 to a downhole device. For example, during a production operation, downhole pressure, temperature or flow rate information from formation 14 may be requested by sending acoustic waves 64 through the sea from acoustic modem 62. Acoustic waves 64 will be received at subsea repeater 48 by acoustic modem 58. Acoustic waves 64 may use FSK or MFSK as described above to carry the information. Acoustic modem 58 will transform acoustic waves 64 into an electrical signal that is passed on to the electronics package of subsea repeater 48 and processed as will be described with reference to Figure 3. Subsea repeater 48 may then generate electromagnetic wave fronts 66 to retransmit the information. Sensors, such as sensors 40, located near formation 14 receive this request and obtain the appropriate information which would then be returned to remote station 54 via electromagnetic wave fronts 46 and acoustic waves 60 as described above.

It should be noted by one skilled in the art that subsea repeater 48 of the present invention may be used in conjunction with downhole repeaters located along tubing string 20 in deep or noisy well application when a subsea repeater is not within the range of electromagnetic wave front 46.

Surface communications are accomplished utilizing one or more computercontrolled master stations 70 and numerous remote stations such as remote station 54. Master stations 70 may be located, for example, on a plafform 72 or at a shorebase 74. The master stations 70 may operate in a polling mode to gather information from the remote stations 54. As described above, remote station 54 gathers and stores downhole information obtained by sensors 40. As meteor trails 76 are formed in meteor region 78, fifty to seventy-five miles above the earth's surface, master station 70 and remote station 54 may communicate with one another. For example, master station 70 may generate a request carried via radio waves 80 that is reflected by meteor trail 76 such that remote station 54 may receive the request. Remote station 54 then analyzes the request and sends the information stored in remote station 54 to master station 70. Master station 70 may poll the various remote stations 54 on a periodic basis to obtain the information stored at each remote station 54. Typically, the polling of remote stations 54 may occur in the morning hours to correspond with the greater meteor activity.

Similarly, master station 70 may be used to request specific information relating to a remote well 12. Master station 70 will send the request via radio waves 80 which are reflected by meteor trails 76 to remote station 54. The request may be forwarded to subsea repeater 48 via electric wire 56. Alternatively, the request may be forwarded by sending acoustic waves 64 through the sea from acoustic modem 62. Acoustic waves 64 will be received at subsea repeater 48 by acoustic modem 58. Acoustic modem 58 will transform acoustic waves 64 into an electrical signal that is passed on to the electronics package of subsea repeater 48 and processed as will be described with reference to Figure 3. Subsea repeater 48 may then generate electromagnetic wave fronts 66 to retransmit the request downhole. Sensors, such as sensors 40, located near formation 14 receive this request and obtain the appropriate information which would then be returned to remote station 54 via electromagnetic wave fronts 46 and acoustic waves 60 as described above. The information may then be transmitted to master station 70 via radio waves 80 reflected from meteor burst trails 76.

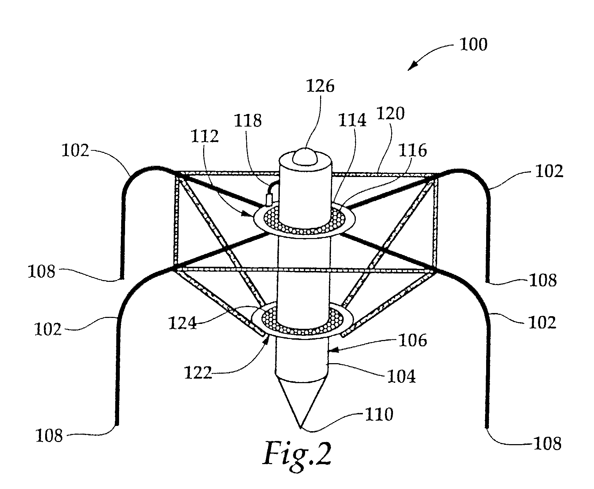

Figure 2 is a perspective representation of subsea repeater 100 of the present invention. Subsea repeater 100 includes a plurality of E-field probes 102 and an H-field probe 104 disposed within housing 106. E-field probes 102 may be constructed from a conductive rod or tubing including metals such as steel, copper or a copper clad. E-field probes 102 each have an end 108 that inserted through sea floor 16 to extend into the earth such that electromagnetic wave fronts, such as electromagnetic wave fronts 46 of Figure 1, may be received by E-field probes 102 without crossing the boundary between the sea and sea floor 16. E-field probes 102 pickup the E-field component of electromagnetic wave fronts 46.

H-field probe 104 of subsea repeater 100 has an end 110 that is inserted through sea floor 16 into the earth such that electromagnetic wave fronts 46 are received by H-field probe 104 before electromagnetic wave fronts 46 cross through the boundary of sea floor 16 and the sea. H-field probe 104 includes one or more magnetometers for detecting the H-field component of electromagnetic wave fronts 46.

Subsea repeater 100 includes an insulated ring 112 that attaches E-field probes 102 to housing 106. Insulated ring 112 includes an electrically conductive ring 114 and a dielectric ring 116. The electrically conductive ring 114 is attached to E-field probes 102 to provide an electrically conductive path between E-field probes 102 and an electronics package disposed within housing 106 via electrical cable 118 such that the information carried in the E-field component of electromagnetic wave fronts 46 may be process as will be discussed with reference to Figure 3. Dielectric ring 116 creates a non-conductive region between conductive ring 114 and housing 106.

Subsea repeater 100 may include an insulated cradle 120 that is disposed between E-field probes 102 and housing 106. Insulated cradle 120 provides structural support to E-field probes 102 to prevent relative translational or rotational motion between E-field probes 102 and housing 106. Insulated cradle 120 may be attached to housing 106 using an insulated ring 122 that may include a dielectric ring 124.

The E-field component of electromagnetic wave fronts 46 generates a current in E-field probes 102. The H-field component of electromagnetic wave fronts 46 generates a current in H-field probe 104. These two currents are passed on to the electronics package disposed within housing 106 as will be more fully described with reference to Figure 3. The electronics package may include a comparator for comparing the relative strength and clarity of the H-field component and the E-field component of electromagnetic wave fronts 46. The electronics package may then select the stronger of the two signals for retransmission. Additionally, the electronics package may compare the H-field component and the E-field component of electromagnetic wave fronts 46 to determine whether both signals carry the identical information as a check of the validity of the transmitted data. After one or both of the electric signals are processed, the information may be stored by subsea repeater 100 in memory. While this information is retained in memory, additional electromagnetic wave fronts 46 carrying information may be received and stored by subsea repeater 100. At a predetermined time, the electronics package generates an electrical signal that is passed on to acoustic modem 126. Using FSK, MFSK or other suitable techniques, the information is then transmitted through the sea by acoustic modem 126.

Acoustic modem 126 may also receive acoustic signals, such as acoustic waves 64 of Figure 1, when subsea repeater 100 serves as a downlink. Acoustic modem 126 transforms acoustic waves 64 into an electrical signal that is passed on to the electronics package disposed in housing 106. The electronics package processes the electrical signal as will be more fully described with reference to Figure 3 below. After processing, the electronics package generates a current in one or more of the E-field probes 102 that in turn generates electromagnetic wave fronts 66 that propagate the information through the earth to a downhole location.

Turning now to Figure 3, one embodiment of the method for processing the electrical signal within a subsea repeater 48 is described. Method 300 provides for digital processing of the information carried in the electrical signal that is generated by receiver 302 which may be an acoustic or an electromagnetic receiver such as acoustic modem 54, E-field probes 50 or H-field probe 52 of Figure 1. Limiter 304 receives the electrical signal from receiver 302. Limiter 304 may include a pair of diodes for attenuating the noise in the electrical signal to a predetermined range, such as between about .3 and .8 volts. The electrical signal is then passed to amplifier 306 which may amplify the electrical signal to a predetermined voltage suitable of circuit logic, such as five volts. The electrical signal is then passed through a notch filter 308 to shunt noise at a predetermined frequency, such as 60 hertz which is a typical frequency for noise in an offshore application in the United States whereas a European application may have a 50 hertz notch filter. The electrical signal then enters a bandpass filter 310 to eliminate unwanted frequencies above and below the desired frequency and to recreate a signal having the original frequency, for example, two hertz.

The electrical signal is then fed through a phase lock loop 312 that is controlled by a precision clock 314 to assure that the electrical signal which passes through bandpass filter 310 has the proper frequency and is not simply noise. As the electrical signal will include a certain amount of carrier frequency, phase lock loop 312 is able to verify that the received signal is, in fact, a signal carrying information to be retransmitted. The electrical signal then enters a series of shift registers that perform a variety of error checking features.

Sync check 316 reads, for example, the first six bits of the information carried in the electrical signal. These first six bits are compared with six bits that are stored in comparator 318 to determine whether the electrical signal is carrying the type of information intended for a subsea repeater such as subsea repeater 48 of Figure 1. For example, the first six bits in the preamble to the information carried in electromagnetic wave fronts 46 must carry the code stored in comparator 318 in order for the electrical signal to pass through sync check 316.

If the first six bits in the preamble correspond with that in comparator 318, the electrical signal is shifted into a data register 320 which is in communication with a parity check 322 to analyze the information carried in the electrical signal for errors and to assure that noise has not infiltrated and abrogated the data stream by checking the parity of the data stream. If no errors are detected, the electrical signal is shifted into one or more storage registers 324. Storage registers 324 receive the entire sequence of information and may pass the electrical signal directly into power amplifier 328 for retransmission by transmitter 330 which may typically occur when subsea repeater 48 serves as a downlink. Alternatively, the information may be stored for a specified period of time determined by timer 326 prior to sending the signal to power amplifier 328.

Transmitter 330 may be an acoustic or an electromagnetic transmitter such as acoustic modem 54 or E-field probes 50 of subsea repeater 48 of Figure 1. For example, transmitter 300 may transform the electrical signal into an electromagnetic signal, such as electromagnetic wave fronts 66, which are radiated into the earth when transmitter 300 is an electromagnetic transmitter. Alternatively, transmitter 300 may transform the electrical signal into acoustic waves 56 that are transmitted through the sea when transmitter 300 is an acoustic modem.

Even though Figure 3 has described sync check 316, data register 320 and storage register 324 as shift registers, it should be apparent to those skilled in the art that alternate electronic devices may be used for error checking and storage including, but not limited to, random access memory, read only memory, erasable programmable read only memory and a microprocessor.

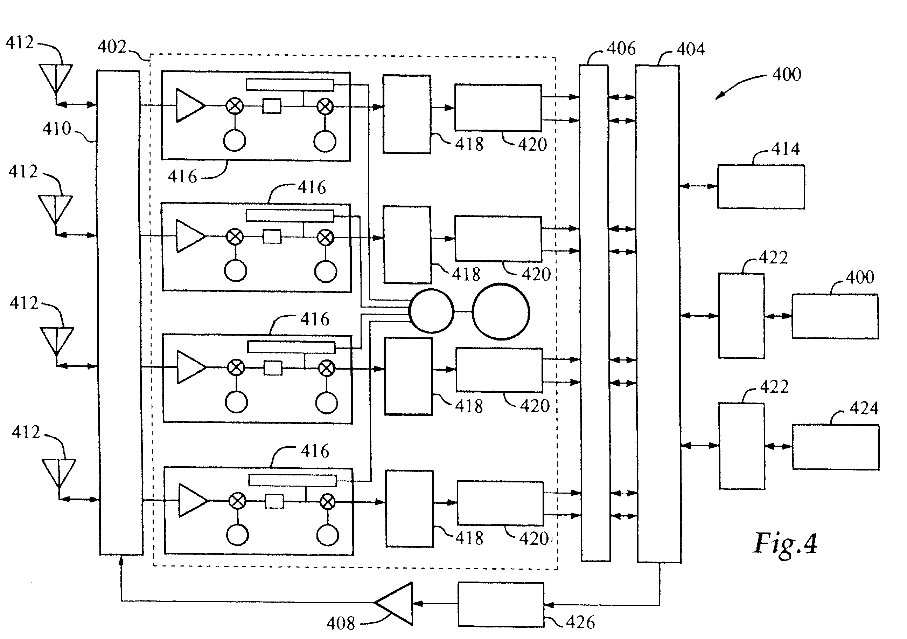

In Figure 4, the functional components of master station 400 are schematically illustrated. These units include transceiver 402, processor 404, control logic card 406, RF power amplifier 408, duplexer 410 and antennas 412. In addition, master station 400 includes a keyboard 414 for user input. Antennas 412 may be horizontally polarized five element Yagi antennas each having 60 beam width. Each antenna 42 provides about 10 dB gain over an isotropic source, and is coated to prevent precipitating static, a major cause of noise. Each antenna 412 is capable of handling 500 watts continuous and exhibits typical VSWR of 1.5 to 2.0.

Antennas 412 feed duplexer 410 which allows simultaneous operation of master station 400 as a transmitter and receiver using two different frequencies on the same antenna 412. For example, master station 400 may transmit at 40.53 MHz while simultaneously receiving at 41.53 MHz. In this example, fixed frequency, crystal controlled, PSK (Phase-Shift Keying) receivers 416 are tuned to the frequency of 41.53 MHz. Receivers 416 produce a 1 MHz output which is routed to phase-locked loops (PLLs) 418 where the output is mixed with a phase stable reference signal to obtain the desired PSK baseband signal. PLLs 418 feed a baseband demodulator 420 which is used to provide bit detection and bit synchronization. An integrate-and-dump matched filter is used as the bit detector, and a digital phase-locked loop is used to obtain the synchronizing (clock) bit.

The outputs of baseband demodulators 420 are routed to control logic card 406 which provides for interfacing between the processor 404 and the transceiver 402. This interface accepts data from receivers 416 and transfers the information to the processor 404 for analysis and processing. Control logic card 406 also accepts commands and data from processor 404 for controlling transmissions from master station 400. Processor 404 may be a minicomputer or workstation that interfaces to the outside world through keyboard 44 and modems 422 which may communicate with other master stations 400 or a command center 424.

During normal operation, processor 404 automatically controls the operation of master station 400, including activating transceiver 402, scheduling and generating requests, receiving, storing, and logging data from the remote stations, such as remote station 54 of Figure 1 and communicating with command center 424. Processor 404, in conjunction with the control logic card 406, generates the requests that are transmitted to the remote stations such as remote station 54. Data generated in processor 404 is fed into the exciter 426 which consists of a crystal controlled oscillator, which regulates the transmitter frequency. The output from exciter 426 is amplified by a continuous duty linear power amplifier 408 and is then divided into the four antennas 412 with a 4-way power splitter.

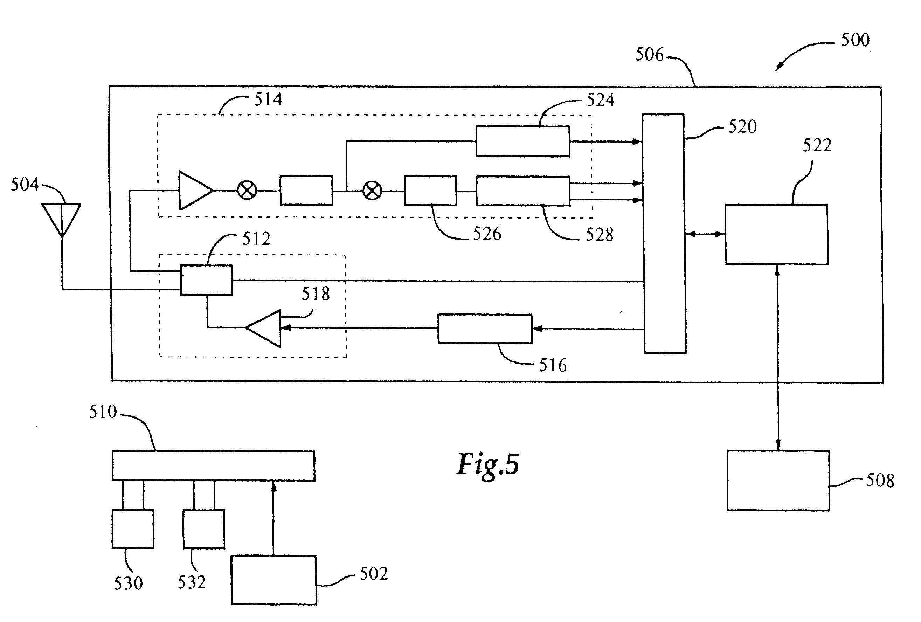

Turning now to Figure 5, a stand-alone, self-contained remote station 500 is schematically illustrated. Remote station 500, with the exception of solar panels 502 and antenna 504, may be housed in an NEMA-4 enclosure. As described above, remote station 500 will accept and store data from subsea repeater 48 or other downhole sources. Upon being properly interrogated by a master station, such as master station 70, stored data is transmitted in an approximately 84-millisecond burst.

Remote station 500 consists of an antenna 504, transceiver 506, memory device 508 and power source 510. A tower-mounted, folded dipole antenna 504 with 0 dB gain may be used at a remote station 500. Alternatively, a dipole with reflectors exhibiting a 2 dB gain characteristic may be used where the communication path may be marginal. Antenna 504 is mounted as high as practicable with no obstructions between antenna 504 and the horizon and is oriented toward master station 70. Antenna 504 operates through a TR switch 512 and feeds transceiver 506 which comprises receiver 514, exciter 516, power amplifier 518, control logic 520, and data acquisition board 522.

Receiver 514 is a fixed-frequency, PSK (Phase-Shift Keying) receiver tuned to a predetermined frequency such as 40.53 MHZ. Receiver 514 exhibits a frequency stability of ± 0025% over a temperature range of -30°C to +60°C, with a sensitivity of 120 dBm. Receiver 514 may also include an RF power threshold circuit 524 which ensures that transmitter 514 will be activated only by adequately respondent meteor trails 76. Transmitter 514 operates into a phase demodulator 526 consisting of a wide band phase-locked loop used to detect the request from master station 70. Phase demodulator 526 feeds a baseband demodulator 528 which extracts bit synchronization and bit data from the phase-locked loop. Output signals from baseband demodulator 528 are processed by control logic 520.

Control logic 520 validates and interprets the request from master station 70 and determines whether data is being sent or is to be sent. Control logic 520 controls transmission from remote station 500 and generates the data preamble, text, and a cyclic redundant check character for each transmission.

Data acquisition board 522 may accept either an analog or a digital input signal. Data acquisition board 522 is off, or asleep, except during request cycles. Control logic 520 may periodically command an update cycle whereby new downhole data is collected as described above and stored in memory device 508 until a transmission request from master station 70 is received. Memory device 508 feeds data, upon request, to control logic 520.

To transmit, control logic 520 feeds data and the appropriate signals to exciter 516 which may consist of a temperature compensated crystal oscillator (TCXO) and a phase-shift modulator which may operate at a frequency of 41.53 MHZ. The output from exciter 516 is fed into power amplifier 518 which amplifies the output.

TR switch 512 allows the use of a single antenna 504 for both receiving and transmitting. TR switch 512 is normally in the receive mode, but is temporarily switched to transmit upon detection of a request.

The power for remote station 500 may be furnished from a combination of Gel-Cell batteries and solar battery charger 502. For example, power for remote station 500 may be provided from a +12-volt battery 530 and a +36-volt battery 532 derived from three 12-volt batteries connected in series which provide a nominal 28-VDC level for transmitting.

To enable charging of the batteries 530, 532, a solar cell 502 is utilized which will provide charging current at a voltage of about 14.5 volts. The choice of solar cell panel 502 depends on the average sunlight at the remote site and must be mounted above obstructions that might obscure the sun. The panels 502 should be installed facing true South with a tilt equal to site latitude plus 11 degrees.

It will be appreciated that the invention described above may be modified.

## Claims

1. A downhole telemetry system (10) for remote communication comprising: a downhole transmitter (44) radiating an electromagnetic signal (46) carrying information into the earth; a subsea repeater (48) communicably linked to the downhole transmitter (44), the subsea repeater (48) receiving the electromagnetic signal (46) carrying the information and retransmitting the information through the sea; a remote station (54) communicably linked to the subsea repeater (48), the remote station (54) receiving the information and generating a radio signal (80) carrying the information that is reflected off meteor burst trails (76); and a master station (70) communicably linked to the remote station (54), the master station (70) receiving the radio signal (80) carrying the information.

2. A system according to claim 1, wherein the subsea repeater (48) further comprises an electromagnetic receiver.

3. A system according to claim 2, wherein the electromagnetic receiver further comprises at least one E-field probe (102) having an end that is insertable into the earth.

4. A system according to claim 1, 2 or 3, wherein the remote station (54) further comprises an acoustic receiver (62).

5. A system according to claim 1, 2, 3 or 4, wherein the remote station (54) further comprises an electronics package.

6. A system according to claim 5, wherein the electronics package further includes a storage device for storing the information.

7. A method for remote communication between downhole equipment and a master station (70) comprising the steps of: receiving an electromagnetic signal (46) carrying the information from the downhole equipment; transmitting the information through the sea; generating a radio signal (80) carrying the information; reflecting the radio signal (80) carrying the information off meteor burst trails (76); and receiving the radio signal (80) carrying the information at the master station (70).

8. A method according to claim 7, wherein the step of receiving an electromagnetic signal (46) further comprises receiving the H-field component of the electromagnetic signal (46) with an H-field probe (104) having an end that is insertable into the earth.

9. A method for remote communication with downhole equipment comprising the steps of: generating a radio signal (80) carrying a request for information; reflecting the radio signal (80) carrying the request for information off meteor burst trails (76); receiving the radio signal (80) carrying the request for information; transmitting the request for information through the sea; generating an electromagnetic signal (46) carrying the request for information; radiating the electromagnetic signal (46) into the earth; and receiving the electromagnetic signal (46) carrying the request for information at a downhole location.

10. The method according to claim 9, further comprising the step of transforming the radio signal (80) into an electrical signal.
